(19) **Europäisches Patentamt**
**European Patent Office**
**Office européen des brevets**

(11) **EP 3 007 396 A1**

(12) **EUROPEAN PATENT APPLICATION**

(43) Date of publication:
**13.04.2016 Bulletin 2016/15**

(51) Int Cl.:
**H04L 27/10** *(2006.01)*

(21) Application number: **14306572.0**

(22) Date of filing: **07.10.2014**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Comsis**
**75014 Paris (FR)**

(72) Inventor: **Oguz, Onur**
**91000 Evry (FR)**

(74) Representative: **Pontet Allano & Associes**
**Parc Les Algorithmes, Bâtiment Platon
CS 70003 Saint-Aubin
91192 Gif-sur-Yvette Cedex (FR)**

(54) **A communication system and a process for communication using energy spectrum**

(57) The present invention relates to a process of encoding a message into a combination of words, each word being generated from a spectrum signature of an alphabet **S**, each spectrum signature being quasi orthogonal to each other.

FIG. 3

**Description**

**Field of the invention**

The present invention pertains to the domain of telecommunication. More precisely, the present invention relates to a communication system provided for sending a message from an emitter to a receiver. It also relates to a method for sending a message from an emitter to a receiver, implemented in the communication system. The invention finds a particularly advantageous, but not exclusive, application in a communication system with a finite number of messages.

**Background of the invention**

In classical digital communication systems, the information to be transmitted is represented as a sequence of symbols with the help of a predetermined alphabet, namely a constellation.

The constellation and the mapping between the information and the symbols of the constellation is determined by the employed digital modulation scheme, which is a system parameter.

Among most common digital modulation schemes, one can name Phase-shift keying (PSK), Frequency-shift keying (FSK), Amplitude-shift keying (ASK), Quadrature amplitude modulation (QAM) and their derivatives.

The symbol sequence is used to generate a transmit waveform and this information carrying waveform is then sent over a communication medium, i.e. channel, which significantly alters the waveform before the receiver observes it.

In order to identify the transmitted information, a receiver of a classical digital communication system, needs to carry out an equalization process to stripe off the effects of the channel from the observed waveform.

In classical digital communication systems, the need of equalization usually requires an additional channel identification step and hence an overhead.

The equalization step introduces additional latency before the transmitted information can be identified. The success of the equalization step depends largely on the success of channel identification.

Both channel identification and equalization processes introduce additional processing time and complexity to the digital communication system.

The robustness of the digital communication system's receiver against channel identification errors can be achieved to some point at a cost of increased complexity and hence latency.

**Summary of the invention**

A goal of the presented invention is to propose a simple and robust digital communication technique where the equalization step is not needed.

Another goal of the present invention is to propose such a digital communication technique where the channel identification step is not needed at the receiver to extract the transmitted information.

Yet another goal in the invention is such a digital communication technique where the complexity is reduced and the latency is reduced.

At least one of the above objectives is achieved through a process comprising a step of encoding a message into a combination of words, each word being generated from a spectrum signature from of an alphabet **S**, each spectrum signature being quasi orthogonal to each other.

The transmit waveform has an energy spectrum that is directly related to the message. Therefore, one can immediately associate a transmit waveform to a corresponding message. This transmit waveform offers more resistance to channel fluctuations.

A spectrum signature say $S_m \in S$ is defined by a number $N_m$ of energy carrying frequencies, a relative placement $df_{m,2}, df_{m,3}, ..., df_{m,N_m}$ of its $N_m - 1$ energy carrying frequencies with respect to its first energy carrying frequency $f_{m,1}$, and spectrum signature bandwidth $B_{S,m}$, that is bigger than, or equal to, the difference between its smallest and the greatest energy carrying frequencies. Its representation in frequency $S_m(f)$ and time $S_m(t)$ are as follows:

$$S_m(f) = \delta\big(f - f_{m,1}\big) + \sum_{l=2}^{N_m} \delta\Big(f - \big(f_{m,1} + df_{m,l}\big)\Big)$$

$$S_m(t) = e^{-i2\pi(f-f_{m,1})t} + \sum_{l=2}^{N_m} e^{-i2\pi(f-(f_{m,1}+df_{m,l}))t}$$

The values $df_{m,2}$, $df_{m,3}$,...$df_{m,N_m}$ might any real number different than zero, or might be integer multiples of a constant frequency resolution value as it is the case in digital communication system. In the latter case, a signature might be represented by a sequence of 0's and 1's corresponding to each and every frequency bin available in the spectrum signature bandwidth.

A spectrum signature $S_m$ is quasi orthogonal to another signature $S_n$ if and only if the maximum of the frequency domain cross correlation between $S_m(f)$ and $S_n(f)$ is strictly lower than the minimum value of their respective energies $\|S_m(f)\|^2$ and $\|S_n(f)\|^2$.

The generation of a word might comprise generating a band limited component waveform $W_{m,k}(t)$ of band $B_{S,m}$ and located around frequency $F_k$, whose energy spectrum doesn't exceed a lower threshold $C_L$ except for $N_{m,S}$ frequencies that are relatively positioned with respect to $F_k$, as defined by the spectrum signature, and have energy contents greater than an upper threshold $C_U$.

A band limited component waveform $W_{m,k}(t)$ might be generated from a spectrum signature say $S_m(t)$ by assigning the value $F_k$ to $f_{m,1}$ and setting coefficients $a_{k,l}$ ($|a_{k,l}|^2 \geq C_U$) as in the following equation:

$$W_{m,k}(t) = a_{k,1}e^{-i2\pi(f-F_k)t} + \sum_{l=2}^{N_m} a_{k,l}e^{-i2\pi(f-(F_k+df_{m,l}))t} + R_k(t)$$

The multimodal signal generation might comprise generating K band limited component waveforms $W_{*,k}(t)$ that are placed around K different assigned first frequencies $F_k$, using one or several different spectrum signatures, and summing these band limited component waveforms to generate the multimodal signal $W_T(t)$ of band $B_T$ to be transmitted, i.e.:

$$W_T(t) = \sum_{k=1}^{K} W_{*,k}(t)$$

The multimodal signal might have an energy spectrum comprising one or more non-overlapping band limited component waveforms.

The number K of band limited component waveforms might carry information.

The differences between the assigned first frequencies ($F_1$, $F_2$... $F_K$) assigned to the first energy carrying frequencies of the used spectrum signatures to form the band limited component waveforms might carry information.

The placement of the assigned first frequencies ($F_1$, $F_2$... $F_K$) assigned to the first energy carrying frequencies of the used spectrum signatures to form the band limited component waveforms might carry information.

Both the differences between the assigned first frequencies ($F_1$, $F_2$... $F_K$) assigned to the first energy carrying frequencies of the used spectrum signatures to form band limited component waveforms and the number of component waveforms might carry information.

Both the placement of the assigned first frequencies ($F_1$, $F_2$... $F_K$) assigned to the first energy carrying frequencies of the used spectrum signatures to form band limited component waveforms and the number of band limited component waveforms might carry information.

In another aspect of the invention, it is proposed a process of decoding a signal into a message, the signal comprising a combination of words, each word being generated from a spectrum signature of an alphabet **S**, each spectrum signature being quasi orthogonal to each other.

When a word is a band limited component waveform $W_{m,k}(t)$ around a frequency $F_k$, the decoding process might comprise the steps:

- making a frequency analysis of the incoming transmit signal;

- identifying an adapted upper threshold $\left( C_U^{\prime} \right)$ based on said frequency analysis;
- identifying a number of band limited component waveforms and frequencies of said band limited component waveforms that are over the adapted upper threshold and identify the patterns matching to spectrum signatures;
- identifying variables comprising the order of band limited component waveforms, the relative placement and the number of different spectrum signatures; and
- identifying the information that are transmitted by interpreting said variables.

The process might comprise identifying the first frequencies of the band limited component waveforms in the multimodal signal, and extracting the information embedded to the differences between these frequencies.

The process might comprise identifying the first frequencies of the component waveforms and the number of band limited component waveforms in the multimodal signal, and extracting the corresponding information.

In another aspect of the invention, it is proposed a process for sending a message from an emitter comprising a step for generating a transmit signal representing information and transmitting said transmit signal through a communication medium, wherein the transmit signal generation step comprises an encoding process according to the invention.

In another aspect of the invention, it is proposed a process for receiving a message at a receiver comprising a step for generating information from a transmit signal, wherein the generation step comprises a decoding process according to the invention.

In another aspect of the invention, it is proposed an emitter comprising means configured for sending a message according to the sending process of the invention.

In another aspect of the invention, it is proposed a receiver comprising means configured for sending a message according to the receiving process of the invention.

In another aspect of the invention, it is proposed a communication system comprising at least an emitter and a receiver, wherein the emitter is an emitter according to the invention and wherein the receiver is a receiver according to the invention.

Therefore, a simple and robust digital communication system is proposed. This communication system does not need an equalization step. The channel identification step is not needed at the receiver to extract the transmitted information. This communication system reduces the complexity and the latency needed to decode a message at the receiver.

## Brief description of the drawings

Other advantages and characteristics of the invention will become apparent on examination of the detailed description of exemplary embodiments, which are in no way limitative, and in view of the following drawings, on which:

- Figure 1 illustrates a typical spectrum signature according to the invention;
- Figure 2 illustrates the energy spectrum of a band limited component waveform according to the invention that is located around frequency $F_k$ and matching the spectrum signature in Figure 1;
- Figure 3 illustrates the energy spectrum of an arbitrary multimodal signal that is generated using four band limited component waveforms; and
- Figure 4 illustrates a sample cross correlation of spectrum signatures with received signal's energy spectrum.

## Detailed description of preferred embodiments

The following embodiments are described for illustrative purposes only and cannot be considered as limiting the invention to the particular forms, features, and combinations thereof. On the contrary, it should be understood that the invention should cover all modifications, equivalents and alternatives falling within the scope of the present invention as defined in the appended claims. In particular, one can consider alternatives of the invention comprising only a selection of described features, which are described in association to other features (even if this or those selected features are isolated within a sentence comprising the other features), in case this selection of features is sufficient to confer a technical advantage or to differentiate the invention with respect to the state of prior art. The selection comprises at least one - preferably functional - feature, without structural details, or with only part of the structural details if only this part is sufficient to provide a technical advantage or to differentiate the invention with respect to the state of prior art.

In accordance with the principles of this invention, a communication system provided for sending a message from an emitter to at least one receiver, the emitter comprising means for generating a transmit signal representing information within said message and for transmitting said transmit signal through a communication medium towards the receiver is achieved by shaping the energy spectrum of transmitted signal. The energy spectrum is shaped by the generating means, namely a waveform generator. In other words, the message to be transmitted is represented through different arrangements of energy carrying frequencies in the transmit waveform's the energy spectrum.

These arrangements can be generated using a predefined set $S$ of $M$ spectrum signatures, say $S_1, S_2, ..., S_M$.

A spectrum signature, say $S_m \in S$ is characterized by three features, i.e:

1) The number ($N_m$) of its energy carrying frequencies;
2) Relative placement ($df_{m,2}, df_{m,3}, ..., df_{m,N_m}$) of its $N_m$ - 1 energy carrying frequencies with respect to its first energy carrying frequency $f_{m,1}$;
3) Its bandwidth ($B_{S,m}$), that is bigger than - or equal to - the difference between its smallest and the greatest energy carrying frequencies.

Its representation in frequency $S_m(f)$ and time $S_m(t)$ are as follows:

$$S_m(f) = \delta\big(f - f_{m,1}\big) + \sum_{l=2}^{N_m} \delta\Big(f - \big(f_{m,1} + df_{m,l}\big)\Big)$$

$$S_m(t) = e^{-i2\pi(f - f_{m,1})t} + \sum_{l=2}^{N_m} e^{-i2\pi\big(f - (f_{m,1} + df_{m,l})\big)t}$$

One or more spectrum signatures can be used to generate the transmit waveform. Each time a spectrum signature $S_m \in S$ is used to generate transmit waveform, its first energy carrying frequency is assigned to a value, say $F_k$, which is determined as a function of message to be transmitted.

Spectrum signature bandwidths $B_{S,m}$ are system design parameters and can be set equal. Different spectrum signatures have different arrangement of energy carrying frequencies and they do not necessarily have the same number of energy carrying frequencies.

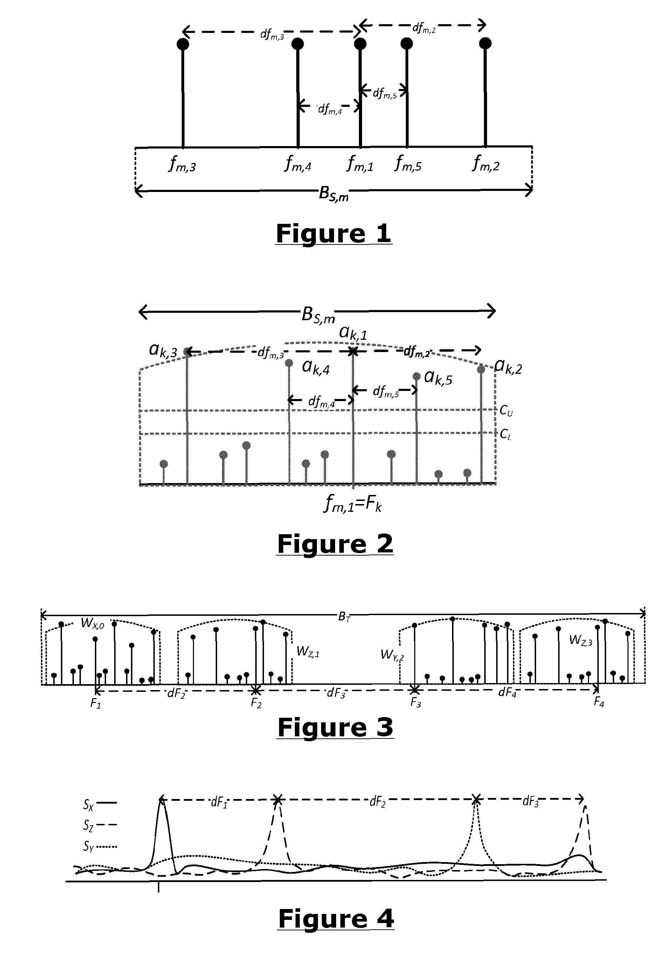

An example spectrum signature with five energy carrying frequencies, i.e. $N_m$=5, which are ($f_{m,1}, f_{m,2}, ..., f_{m,5}$) is illustrated in Figure 1. Differences between the five frequencies, namely ($df_{m,2}, df_{m,3}, ..., df_{m,5}$) are also shown on Figure 1.

The message can be expressed through the arrangements including:

1) type of spectrum signatures;
2) order of the spectrum signatures;
3) number of spectrum signatures; and
4) relative placement of the spectrum signatures i.e. the spectral distance ($dF_k = F_k - F_{k-1}$) between their assigned first frequencies.

The arrangements corresponding to different messages can be generated online or stored in a lookup table. These arrangements are of the form: $S_a, dF_1, S_b, dF_2, S_c, dF_3, S_b, ...$, i.e. a series of spectrum signature type, spectral distance values where same spectrum signature types can be used several times. If there are only a limited number of possible messages, the corresponding arrangements can be stored in a lookup table. If the messages are arbitrary and not limited, a message-to-arrangement mapping scheme can be devised to generate the arrangements for each arbitrary message. A lookup table basically relates an arrangement to a message.

Once the message arrangement is generated, the spectrum signatures are utilized as templates to create band limited component waveforms centered at determined frequencies. For example, for a given spectrum signature say $S_m(t)$ by assigning the value $F_k$ to $f_{m,1}$ and setting coefficients $a_{k,l}$ ($|a_{k,l}|^2 \geq C_U$) as in the following equation:

$$W_{m,k}(t) = a_{k,1} e^{-i2\pi(f - F_k)t} + \sum_{l=2}^{N_m} a_{k,l} e^{-i2\pi\big(f - (F_k + df_{m,l})\big)t} + R_k(t)$$

In the above equation, the coefficients $a_{k,l}$ determine the energy allocated to the concerned frequency ($F_k$ + $df_{m,l}$). It is sufficient have this energy be greater than a given threshold ($C_U$), i.e. $|a_{k,l}|^2 \geq C_U$ while the energy allocated to different energy carrying frequencies do not need to be equal. The thresholds are system parameter. One can set any value for a threshold in accordance with the energy which is spent. On the other hand, the term $R_k(t)$, signifies an optional rectifying waveform with arbitrary number of frequency components. This term can be used to modify time domain characteristics of the transmit signal. For example in OFDM, PAPR (peak to average power ratio) is an important problem. To alleviate such problems, one can use non-information carrying but rectifying waveforms as long as they are not mistaken for spectrum signatures. To ensure this, the rectifying waveform's energy components must be smaller than lower threshold. It is required that the energy spectrum of $R_k(t)$ doesn't exceed a lower energy threshold $C_L$ where $C_L \leq C_U$.

An example of a band limited component waveform energy spectrum, located around frequency $F_k$ and matching the spectrum signature in Figure 1 is illustrated in Figure 2. The example band limited component waveform spectrum contains five frequencies with energy contents greater than $C_U$ and these frequencies are separated exactly as given in the spectrum signature in Figure 1. In the example band limited component waveform spectrum, the frequencies with energy content lower than $C_L$ constitutes the rectifying waveform.

As stated previously, the message to be transmitted is represented through the energy spectrum of the transmit signal. More precisely, as a function of the message to be transmitted following parameters are decided:

1) the spectrum signatures to be used;
2) numbers of band limited component waveforms corresponding to each spectrum signature and the total number ($K$) of component waveforms;
3) order of band limited component waveforms (i.e. spectrum signatures); and
4) the relative positioning (spectral distance) of band limited component waveforms.

Then K band limited component waveforms, say $W_{a,1}(t)$, $W_{b,2}(t),..., W_{m,K}(t)$ are formed around frequencies $F_1$, $F_2,..., F_K$, which are separated by $dF_2,..., dF_K$.

Finally these band limited component waveforms are added together to obtain the transmit signal of bandwidth $B_T$:

$$W_T(t) = W_{a,1}(t) + W_{b,2}(t) + \cdots + W_{m,K}(t)$$

This transmit signal has an energy spectrum that is shaped as a function of the message to be transmitted.

An example of a transmit signal energy spectrum is illustrated in Figure 3. The example transmit signal employs three spectrum signatures, i.e. "X", "Y" and "Z", to generate four band limited component waveforms that are ordered as $W_{X,1}$, $W_{Z,2}$, $W_{Y,3}$, and $W_{Z,4}$, and separated in the spectrum by $dF_2$, $dF_3$ and $dF_4$.

In any communication system, transmit signal transverses a communication medium, i.e. channel, before reaching to the receiver. The communication channel causes some modifications on the transmit signal, which are usually modeled by a convolution of the transmit signal with the channel transfer function $H(t)$. Furthermore, there may also present background noise ($Z(t)$) in the channel. As a result, the receiver, i.e. the destination of the message, observes a receive signal $W_R(t)$, that is different than the transmit signal and formulated as:

$$W_R(t) = W_T(t) * H(t) + Z(t)$$

In order to identify the transmitted message, the receiver needs only to analyze and interpret the energy spectrum of $W_R(t)$, with respect to spectrum signatures and their placements. A Fourier Transform might be used to analyze the energy spectrum. It is not required to identify neither channel transfer function, nor the background noise.

For example, a cross correlation (*) of each spectrum signature with the energy spectrum of the received signal, i.e. $\forall_m$, $S_m*|W_R(f)|^2$, will reveal all the used spectrum signatures and their relative placement on the spectrum, hence all necessary variables needed to identify the transmitted message. Expected output of such correlation is illustrated in Figure 4 for the transmit signal of Figure 3. Figure 4 illustrates that one can decide which band limited component waveform has been emitted by maximizing the correlation between the received signal to each of the spectrum signatures.

It should be noted that the invention is not limited to the aforementioned examples. Numerous variants may be applied to the above examples without going the scope of the invention. Moreover, different characteristics, forms, variants and alternatives of the invention may be combined with one another in various combinations provided that they are not incompatible or mutually exclusive.

**Claims**

1. Process of encoding a message into a combination of words, each word being generated from a spectrum signature of an alphabet **S**, each spectrum signature being quasi orthogonal to each other.

2. Process according to claim 1, wherein the generation of a word comprises generating a band limited component waveform $W_{m,k}(t)$ of band $B_S$ and located around frequency $F_k$, whose energy spectrum doesn't exceed a lower threshold $C_L$ except for $N_{m,S}$ frequencies that are relatively positioned with respect to $F_k$, as defined by the spectrum signature, and have energy contents greater than an upper threshold $C_U$.

3. Process according to claim 2, comprising generating a multimodal signal, the multimodal signal generation comprising generating $K$ band limited component waveforms $W_{*,k}(t)$ that are placed around $K$ different frequencies $F_k$, using one or several different spectrum signatures and summing these band limited component waveforms to generate the multimodal signal $W_T(t)$ of band $B_T$ to be transmitted, i.e.:

$$W_T(t) = \sum_{k=1}^{N} W_{*,k}(t)$$

4. Process according to claim 3, wherein the multimodal signal has an energy spectrum comprising one or more non-overlapping band limited component waveforms.

5. Process of decoding a signal into a message, the signal comprising a combination of words, each word being generated from a spectrum signature of an alphabet **S**, each spectrum signature being quasi orthogonal to each other.

6. Process according to claim 5, wherein the signal comprises K words, a word being a band limited component waveform $W_{m,k}(t)$ around a frequency $F_k$ and the decoding process comprises the steps:

   - making a frequency analysis of the incoming transmit signal;
   - identifying an adapted upper threshold $\left(C_U'\right)$ based on said frequency analysis;
   - identifying a number of band limited component waveforms and frequencies of said band limited component waveforms that are over the adapted upper threshold and identify the patterns matching to spectrum signatures;
   - identifying variables comprising the order of band limited component waveforms, the relative placement and the number of different spectrum signatures; and
   - identifying the information that are transmitted by interpreting said variables.

7. Process according to claim 6, further comprising identifying the first frequencies of the band limited component waveforms in the multimodal signal, and extracting the information embedded to the differences between these frequencies.

8. The process according to claim 6, further comprising identifying the first frequencies of the component waveforms and the number of band limited component waveforms in the multimodal signal, and extracting the corresponding information.

9. Process according to any one of claims 1 to 8, wherein a spectrum signature say $S_m \in S$ is defined by a number $N_m$ of energy carrying frequencies, a relative placement $df_{m,2}, df_{m,3},...,df_{m,N_m}$ of its $N_m$ - 1 energy carrying frequencies with respect to its first energy carrying frequency, and spectrum signature bandwidth $B_{S,m}$, that is bigger than, or equal to, the difference between its smallest and the greatest energy carrying frequencies.

10. Process according to any one of claims 2 to 9 wherein a band limited component waveform $W_{m,k}(t)$ is generated from a spectrum signature say $S_m(t)$ by assigning the value $F_k$ to $f_{m,1}$ and setting coefficients $a_{k,l}$ ($|a_{k,l}|^2 \geq C_U$) as in the following equation:

$$W_{m,k}(t) = a_{k,1}e^{-i2\pi(f-F_k)t} + \sum_{l=2}^{N_m} a_{k,l}e^{-i2\pi\left(f-\left(F_k+df_{m,l}\right)\right)t} + R_k(t)$$

**11.** Process according to any one of claims 1 to 10, wherein in the number K of band limited component waveforms carries information.

**12.** Process according to any one of claims 2 to 11 wherein the differences between the assigned first frequencies ($F_1$, $F_2$... $F_N$) assigned to the first energy carrying frequencies of the used spectrum signatures to form the band limited component waveforms carry information.

**13.** Process according to any one of claims 2 to 12 wherein both the differences between the assigned first frequencies assigned to the first energy carrying frequencies of the used spectrum signatures to form the band limited component waveforms and the number of band limited component waveforms carry information.

**14.** Process for sending a message from an emitter comprising a step for generating a transmit signal representing information and transmitting said transmit signal through a communication medium, **characterized in that** said transmit signal generation step comprises an encoding process according to any one claims 1 to 13, when further depending on any one of claims 1 to 4.

**15.** Process for receiving a message at a receiver comprising a step for generating information from a transmit signal, **characterized in that** said generation step comprises a decoding process according to any one claims 1 to 13, when further depending on any one of claims 5 to 12.

**16.** Emitter comprising means configured for sending a message according to the process of claim 14.

**17.** Receiver comprising means configured for sending a message according to the process of claim 15.

**18.** Communication system comprising at least an emitter and a receiver, wherein the emitter is an emitter according to claim 16 and wherein the receiver is a receiver according to claim 17.

**Figure 1**

**Figure 2**

**Figure 3**

**Figure 4**

Europäisches Patentamt

European Patent Office

Office européen des brevets

# EUROPEAN SEARCH REPORT

Application Number

EP 14 30 6572

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/269841 A1 (GOODMAN JOEL I [US] ET AL) 18 September 2014 (2014-09-18)<br>* figures 4,5 *<br>* page 1 - page 2 *<br>* paragraph [0037] - paragraph [0039] *<br>----- | 1-18 | INV.<br>H04L27/10 |
| X | CHEE YEOW MENG ET AL: "Matrix codes and multitone frequency shift keying for power line communications",<br>2013 IEEE INTERNATIONAL SYMPOSIUM ON INFORMATION THEORY, IEEE,<br>7 July 2013 (2013-07-07), pages 2870-2874,<br>XP032497189,<br>ISSN: 2157-8095, DOI:<br>10.1109/ISIT.2013.6620750<br>[retrieved on 2013-10-03]<br>* page 2870 - page 2871 *<br>----- | 1-18 | |
| | | | TECHNICAL FIELDS SEARCHED (IPC)<br><br>H04L |

The present search report has been drawn up for all claims

| Place of search | Date of completion of the search | Examiner |
|---|---|---|
| The Hague | 30 March 2015 | Hanus, Pavol |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 14 30 6572

This annex lists the patent family members relating to the patent documents cited in the above-mentioned European search report.
The members are as contained in the European Patent Office EDP file on
The European Patent Office is in no way liable for these particulars which are merely given for the purpose of information.

30-03-2015

| Patent document cited in search report | Publication date | Patent family member(s) | Publication date |
|---|---|---|---|
| US 2014269841 A1 | 18-09-2014 | NONE | |

For more details about this annex : see Official Journal of the European Patent Office, No. 12/82

EPO FORM P0459